# EUROPEAN PATENT APPLICATION

(11) **EP 2 136 274 A1**
(43) Date of publication of application: **23.12.2009**
(21) Application number: 09007765.2
(22) Date of filing: 12.06.2009
(51) Int. Cl.: G05B 19/409, G06F 1/16

(54) **Electronic device adapted to be worn on an arm of an operator and to be used in the field of automated manufacturing in textile industry**

(30) Priority: 19.06.2008 IT TO20080482
(71) Applicant: Livingtech di Comper e Associati, 24129 Bergamo (BG) (IT)
(72) Inventor: Comper, Riccardo, 24129 Bergamo (BG) (IT)
(74) Representative: Garavelli, Paolo

(57) **Abstract**

An electronic device wearable on the arm of an operator (just like a large watch), allowing him thus to work with free hands. The device is equipped with a rechargeable battery, has a graphic touch-screen display and is able to communicate over wireless nets with machinery automation and control systems, as well as with centralized or distributed computers, such as those used in various manufacturing control procedures or for the remote control of production plants. This device is provided with software tools implementing algorithms, functions and automation procedures which, processing data, inputs and commands coming from shared networks and/or the web, allow to have a mobile communication interface and synergetic effects between man and machinery, integrating and checking in real time, safely, efficiently and in an ergonomic way, processes steps, commands and manual operations within manufacturing cycles which are largely, but not totally, automated.

## Description

The present invention concerns an electronic device, which can be worn on the arm of an operator, having algorithms and protocols for the implementation of a mobile communication interface and a man/machine synergy in the context of manufacturing cycles in textile industry.

The invention is based on an electronic device wearable on the arm of an operator, as it would be a big wristwatch. This solution allows thus the operator to make use of the worn device while being able to carry on his work with free hands. The device has limited weight, is of sturdy make and waterproof, has an appreciable autonomy thanks to a rechargeable battery, has a graphic touch-screen display and/or a functional keyboard and is equipped with a connection to wireless networks. The device can also be equipped with RFID technology for the remote identification of people and objects via radio waves and, in a more advanced version, it can be equipped with GPS and/or GPRS/UMTS receivers, therewith allowing its exact location and/or the direct connection to the web as well as to mobile telephone nets.

The application side of this invention provides for the wireless connection of said device to one or more heterogeneous networks, composed of automation and control systems of process machines and production plants (installed in the field and in production areas) on one side, and to centralized or distributed computers (usually located in offices, laboratories or technical rooms) on the other side, connected to cabled networks or to the web, and used in various management procedures or for the remote supervision of the production.

The invention exploits therefore technical and functional potentialities resulting from the harmonious integration of the following technologies, as mentioned:
- device wearable by the operator;
- RFID, GPS and/or GPRS/UMTS interfaces;
- wireless and cabled networks;
- automation and control systems;
- manufacturing supervision systems and management computers.

The invention concerns more specifically the implementation, on the subject device, of software tools, algorithms, functionalities and procedures which, through processing data, information and commands from common networks or via the web, establish an advanced mobile interface and an innovative man/machine synergy, integrating and controlling timely, safely, optimally and in an ergonomic, most advantageous way, commands and manual operations within production cycles which are automated to a large extent, but so far not completely.

The invention is intended to find a wide range of applications and improvements above today's state of the art within the production cycles in the textile industry (dyeing, refining, resin, coating, finishing, weaving, printing and other processes), in which it is common to use automation, but where the role of the operator and the man in general still remains critical and significantly influent due to the fact that workers are not always sufficiently qualified, that most processes are discontinuous and fractionated, that production departments have generally high numbers of machines (often also widespread) and finally that some plants have such characteristics as not to allow full automation of some working phases (i.e. during internal transporting, charging and discharging of fabrics, sampling and quality checking, managing of correction and process variations, resetting of alarms and malfunctions).

Today in the textile industry, as well as in other main industrial sectors (i.e. chemicals, pharmaceuticals or food), the use of automation and control systems of entire production plants is widespread and consolidated.

State of the art today is that all automated machines and plants are equipped locally with a dedicated HMI ("Human Machine Interface"), mounted on the machine or plant, or nearby. This operator interface, which can be defined as of a first level, can be of various degrees of sophistication (depending on complexity and criticality of the related application) and is made of traditional components (analogue and digital indicators, pushbuttons and switches, flashlights, acoustic alarms) and/or keyboards, graphic or alphanumeric displays, touch-screens and PCs.

It is also becoming common practice today to use distributed or centralized control and supervision systems, mainly built according to various setups of computers and cabled networks of PCs/PLCs, known to the specialists as SCADA ("Supervisory Control And Data Acquisition") or DCS ("Distributed Control System"). Such systems, by using a field bus (i.e. Profibus) and/or a cabled network (i.e. Ethernet), or now even the web directly, interact by exchanging data, information and commands with the various controllers of machines in the plant, thus implementing a higher level operator interface which is complete (it can give information of all machinery in production cycles), intuitive and very detailed, but which is accessible and usable in one position only, which is remote with respect to the positions of the process machines and controlled plants.

The result is that in industrial current reality the operator has to interact with these two Human Machine Interface typologies only, tending to privilege the first, the local one, due to the need of having to perform manual operations on the machinery too.

An accurate analysis of today's scenery evidences operation problems, limitations, impediments and functional shortcomings in textile plants supervision and control that the present invention intends to successfully overcome.

In common practice there are frequent operational situations (i.e. the start of motors when loading the fabrics into a rope dyeing machine) during which the operator has to interact "intimately and physically" with the machinery and has to "synchronize" his actions with the control logic via pushbuttons and switches which, however, are not always located on the machine or on the plant in a position which is optimal, practical, easy, useful, comfortable, ergonomic and most safe.

Furthermore, it is evident that even today, within up-to-date plants, in many cases the operator has to be physically near a given machine or, as an alternative, in the remote control and supervision station, for having access to critical information concerning the current state of functioning (such as the progress of the process being executed, the time left till the end or the actual active alarm status). In the same way also the ability to give commands or activate functional consensus is subordinated to a Human Machine Interface, which has obviously to be available and easily accessible. This location-dependence of the operator generates numerous critical situations and limitations: for example, in case the control system timely signals an alarm situation, or asks for the go-ahead consent to automatically continue the manufacturing cycle, then the operator is able to act and intervene immediately (without consequences for the safety and without causing economical loss) only and solely if (a very improbable case) his working routine finds him on or in proximity of the HMI connected to the control system concerned (due to this reason in common practice there is a massive use of acoustic and optic devices installed in plants).

For the further case of having operator calls from several machines at the same time, often in absence of having the possibility in real time to gain an overall view of the situation, the operator mostly will have to act and intervene without applying the best priority criteria which would allow him to minimize losses.

At the current state of the art, the number of HMIs within production plants is dependent on the number of the installed machines and not so on the number of the operators involved in their management. For the applications addressed by this invention, the numerical relation between machinery and operators is, for most cases, widely unbalanced: in fact, a single operator can have the responsibility of ten, twenty or even thirty machines or plants. Paradoxically, competition between machinery manufacturers induces them to conceive more and more sophisticated HMIs, hence more complex and expensive, which, for most of the time, due to said ratio between machines and operators, will remain underexploited or even idle during production. Finally, it has to be stated that each and every HMI is in fact for the industry also a critical issue for production and maintenance, which can be source of delays, errors or faults, which (even if partially) can compromise the good results of the production processes.

Another issue about the common practice is that in most cases the access to data processed by control and supervision computers (SCADA or DCS) is limited to one person at a time only, since they are usually equipped with just one monitor and keyboard.

Finally, in today's common practice, there are no particular technological solutions to be found which would allow evaluating, measuring and recording the work, the efficiency and the productivity of the operators, to monitor their displacements and presence in the various production departments, as well as permitting to regulate and coordinate their actions according to objective rules within management policies and strategies.

Therefore, object of the present invention is overcoming the limits of today's common practice, such as described, implementing an advanced mobile interface and an innovative man/machine synergy for industrial production processes widely, but not fully, automated.

This is obtained with the realization of a mobile interface through a device worn by the operator, allowing him to interact in safety, ergonomically, freely, duly and timely with several automation and control devices, with supervision systems and computers networks, without constrictions or limitations given by his phisical position in the manufacturing departments, in the offices, in company facilities or in leisure spaces (coffee shop or canteen). Thanks to the mobile networks and to the wireless connection to the web, this operator interface could also be utilized in contexts outside the manufacturing unit, such as on the road, in the car, in the train or at home of the person responsible for plants supervision.

The inherent characteristic of mobility and the wireless connectivity of the application being object of this patent constitute a definite, fundamental and important element of advantage.

This and other objects according to the present invention are obtained by making use an electronic device wearable by the operator, having suitable software tools and functionalities such as described in claim 1.

Further features and application, operation, technical and functional specifications are provided and described in the dependent claims.

The features and the advantages of the present invention will become more evident from the following description, which is a non-limiting application examples of the invention.

For more clarity and a better comprehension of the description, the following drawings are added, to be taken as purely indicative and schematic:

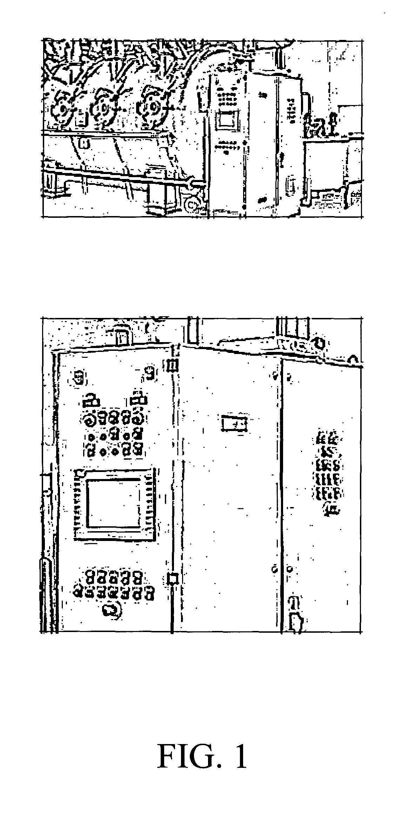

- figure 1 shows an example, typical for common practice, of an HMI (Human Machine Interface) solution;

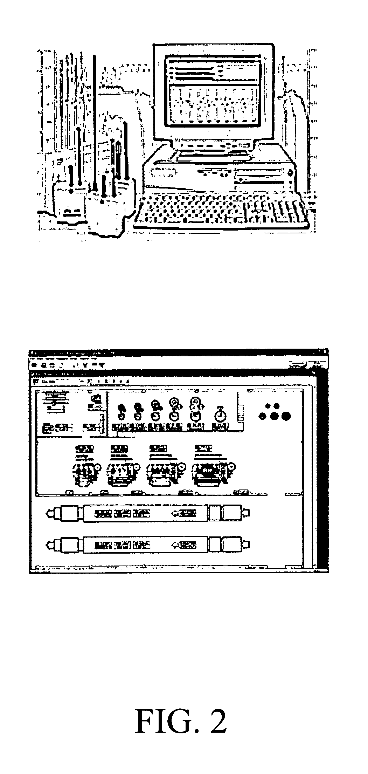

- figure 2 shows an example, typical for common practice, of a SCADA (Supervisory Control And Data Acquisition) solution;

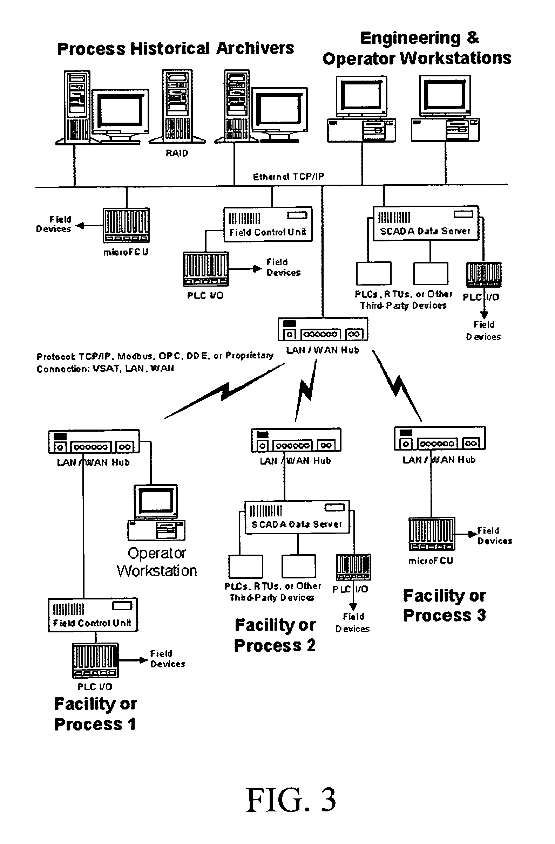

- figure 3 shows an example, typical for common practice, of cabled interconnections in a DCS (Distributed Control System) architecture;

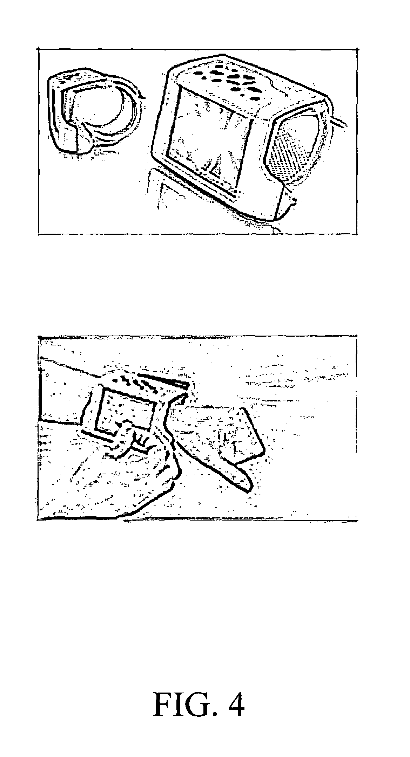

- figure 4 shows an example of a device which can be worn on the arm of an operator and on which the application of this invention is based.

The invention consists of a mobile interface which provides the operator, independently from his actual position, with the possibility to spontaneously and freely access to information and data (to which he obviously has an access permit) available on shared networks and which can concern the whole production area of which he is responsible, as well as a specific selected machinery. Such information can, for instance, be regarding the work progress of the automated plant, the current working cycle or various tasks and management situations connected thereto. Therefore, this puts the operator in the position of having, at all times and everywhere, complete control over the various fabrication and operation aspects and allows him to rationalize his movements in departments and optimize the use of his time, having at his disposal, at all times and places, information and data which otherwise would be available only at the HMIs of the process machines or then in the remote supervision and control terminal (SCADA or DCS). In this way the operator, taking advantage of the wearable device and of the specific software installed, all the while continuing to control the full sphere of manufacture under his responsibility, can remain physically present and operative in the place considered currently most appropriate and advantageous for the production.

The invention consists of a mobile interface which offers the operator also the possibility (independently of his actual location) to acquire (over the common networks) and to automatically receive in real time (from the various automation systems or from the supervision and operational computers) working information and indications of his competence, which can, for instance, concern the alarm status of a particular machinery or the end phase of an automatic process which requires manual intervention. Most evident are the practical advantages generated by the automatic real time information supply, be it signals, indications or messages concerning unforeseen operational events and functional situations, being urgent, dangerous or simply important (warning message) and which can concern either a single machine or the whole production department.

The invention consists of a mobile interface providing the operator with the possibility, independently of his location, to activate manual commands or remote orders (by means of control algorithms based on the network communication with other equipment) and to send to the various connected automation systems conditioned and stringent authorizations, operational go-ahead consents or functional parameters. In fact, should safety procedures so allow, the operator can interact with the machinery without necessarily being physically present on the spot, nor having to go to the remote control terminal. This means that the operator remains free to concentrate his job on priority work, work already under way, without having to interrupt these, without having to generate dead times into the production cycles and without losing time himself with displacements in between the various operating positions and working areas.

The invention consists of a mobile interface which offers the operator also the possibility, when he has to manually intervente at a specific machine (for instance, for starting the motors during the loading of fabrics into a rope dyeing machine), to "intimately and physically" interact with the given machine and to "synchronize" himself with the respective automation logic, making use directly of the functionalities implemented in the arm worn device, which is communicating wireless with the automation system of the concerned plant. For this particular case, on the wearable device it is foreseen to provide the "cloning" or duplicating of functionalities and commands which are usually and traditionally only implemented in the HMIs, available on or in the immediate vicinity of the process machines. Thanks to the use of the wearable device, the operator can hence make use of these functions and commands in real time (in this way rendered more ergonomic and always readily available) displacing himself freely during his work and operating in an optimal, more practical, useful, comfortable, ergonomic and safe way.

In alternative to the simple duplication of some functionalities and commands, such as described in the previous paragraph, this invention also provides, with the same and further advantages, the possibility of completely and radically replacing some of the traditional HMIs of machines and plants on the wearable device, employing adequate interfacing software. This concept totally revolutionises the common practice which, as we have seen, is based on a number of man/machine interfaces being direct function of the number of installed machines, and not related to the number, generally much smaller, of the operators planned for the production management. Therefore, the invention also considers that, when the operator is in the immediate vicinity of a machine, his arm worn device would acquire (from the common networks and from its own pre-programmed memory) the interface software of the particular machinery (which obviously varies according to machine type) and could then follow the specific log-in and synchronization procedure with the automation system of the machine, so as to obtain a fully working man/machine interface right on the device worn by the operator present. Such acquirable interactivity and operability could be particularly innovative, ergonomic and appreciable by fully exploiting the technical, constructive and ergonomic characteristics of the wearable device on which this invention is based (graphic touch-screen, functional keyboard, sensors, accessories, etc.). This radical solution allows therefore the operator to work and interact with the various machines and production plants, independently of their specialty, making use only and always of the same and unique device on his arm, be it for acquire information, as well as for giving commands, configure functions, set operational parameters, reset alarms, etc. This innovative approach has also the purpose of reducing the number of, and of technically simplifying, the traditional man/machine interfaces in use today, which are always a substantial cost factor and which represent an important and critical matter for maintenance and for production processes. Furthermore, the HMIs found in a production unit are most seldom interchangeable, being physically wired to the machines, because mostly built by different manufacturers using in-house developed solutions and because of being manufactured at different times, using disparate components, brands and technologies. Thanks to this invention, it is thinkable and desirable to plan man/machine interface software for plants and machinery coming from different manufacturers, using the same "look & feel" and which therefore are similar and tuned to each other, in this way simplifying, standardizing and improving their look, their ergonomic qualities and their use. Further advantages of this solution are cost saving, technical and structural simplicity, easiness of use, being most practical, being interchangeable, and their inherent predisposition for building in future improvements based prevailingly, but not exclusively, on the diffusion and distribution of new application software tools.

The invention is a mobile interface offering the operator also the possibility to use, everywhere and at the same time others use them, of some or all management and supervision functionalities, processed with centralized or distributed computers (SCADA or DCS) and normally only accessible at one fixed remote terminal (located in offices, laboratories, technical rooms). The wearable device can hence be used, thanks to being programmable and being connected to the networks, as if it were a further interface between the operator and these computers, being auxiliary and personalized, additional to the existing monitors with keyboards, thus allowing visibility and handling of the computed data also to more persons at the same time. In an extreme case, for instance, using the connection of the wearable device to the web, the operator could also continue to oversee the production units "comfortably" remaining sitting in his car, in the train or at home.

The invention is also incorporating RFID technology for the automatic remote identification via radio waves of the various machinery and of the operators responsible for these, allowing respective synchronization and functional discrimination. In fact, through the RFID sensors and transducers in the wearable device worn by the operators and on the machines or in their immediate vicinity, the specifically developed software installed on each device would allow to recognize the presence of each operator and of his proximity to each plant, either blocking possible action on the plant of an operator not authorized, or activating spontaneously and automatically specific procedures and algorithms such as, for instance, log-in and synchronization with the automatic control and supervision system of the machine recognized or the visualization of its process data and the listing of the most salient occurred events. In effect, this is a further man/machine synergy with clear and evident benefices.

The invention is also taking advantage of sensors and RFID transducers and/or GPS receivers and/or accelerometers (with which the wearable device can be equipped) for detecting randomly or continuously and in real time the actual location of each operator, as well as his state of motion or stand still. Both the actual location and the dynamic status of each operator are original and valuable information that the software can convey to the common networks with various finalities, such as the monitoring of the physical position and of the distribution of the personnel within the production departments, the tracking of their displacements and rests, the evaluation, the measurement and the registration of their effectiveness, efficiency and productivity, as well as the coordination and optimization of their manual interventions. For instance, for the case of a generic alarm generated by the automation system of a specific process machine, the service malfunction signal could be transmitted in real time directly to the wearable device of the operator finding himself nearest to the subject machinery.

The invention is contemplating the use, via connection to the web, to the common networks and/or to mobile telephone networks linked to GPRS/UMTS receivers, of the wearable device also as simple, practical and effective device for mobile communication (whether audio/video or written). The operators in the field will therefore be able to communicate in between themselves and co-operate through their arm worn devices and the production supervisor will be able to send them operation instructions by using the common VOIP or chat programs (such as, for instance, Skype or Messenger).

Finally, the invention covers also the cabled or wireless connection of the wearable device to various electronic equipment having specific functions, such as signal transducers, audio interfaces, webcams, bar code readers, life savers or biometric sensors. For example, the device the operator is wearing while working could monitor his cardiac activity, thus checking on his health conditions and safety (of particular interest is the case of personnel of higher age, but still performing heavy work or being in health rehabilitation).

This invention offers clear advantages and benefits easily recognizable when considering the application concepts described so far, as well as the technical and functional concepts put forward in the herein following claims.

It is evident that all concepts here exposed in a general way can be further developed with numerous changes and variations, which however are all to be interpreted as part of this invention.

Also clear is that all details mentioned can be substituted by elements being technically and functionally equivalent.

Beyond the description, the extension of protection of this invention is defined by the following claims.

## Claims

1. Electronic device, adapted to be worn by an operator, with algorithms and programmed procedures for the implementation of a mobile communication interface and for generating a man/machine synergy within the context of automated manufacturing processes, said device being adapted to integrate and use in a combined way the following technologies:
• wearable electronic device;
• RFID, GPS and/or GPRS/UMTS interfaces;
• wireless and wired networks;
• automation and control apparatus;
• production control computers and supervision systems.

2. Electronic device according to claim 1,
**characterized in that** it has at least one graphic touch-screen display and/or a small keyboard, and it is adapted to be worn by an operator involved in operation and control of automatic manufacturing cycles in textile industry.

3. Electronic device according to claim 1,
**characterized in that** it is adapted to be connected in a wireless mode to one or more structured networks, through which such device can interact with automation and control apparatus and with centralized or distributed computers used for manufacturing control and for the remote supervision of production plants.

4. Electronic device according to claim 1,
**characterized in that** it is additionally equipped with a RFID interface for the remote identification of objects and persons via radio waves.

5. Electronic device according to claim 1,
**characterized in that** it is additionally equipped with a GPS and/or GPRS/UMTS receiver and antenna suitable for locating its own physical position and/or for directly accessing the web and mobile phone networks.

6. Electronic device according to claim 1,
**characterized in that** it is adapted to directly and freely access to all available information and data, for which the user has access authorization.

7. Electronic device according to claim 1,
**characterized in that** it is adapted to be used for automatically and in real time receiving information and data pertaining to the user.

8. Electronic device according to claim 1,
**characterized in that** it is adapted to be used for activating manual or automatic commands and for sending out conditioned and conditioning authorizations, operative go-aheads and functional parameters.

9. Electronic device according to claim 1,
**characterized in that** it contains therein, in a cloned and duplicated form, functions and commands otherwise only provided on traditional local Human Machine Interface, HMI, or in the immediate neighbourhood of the machinery.

10. Electronic device according to claim 1,
**characterized in that** it is adapted to be used for substituting some traditional local Human Machine Interface, HMI, related to machinery and plants.

11. Electronic device according to claim 1,
**characterized in that** it is adapted to be used by a user for having available some or all of the supervisory functions and usually only implemented by traditional computers or SCADA and DCS systems.

12. Electronic device according to claim 1,
**characterized in that** it is adapted, making use of RFID technology, to automatically and remotely identify various machinery and operators responsible for their operation, thereby allowing to implement synchronizations and functional as well as operational differentiations.

13. Electronic device according to claim 1,
**characterized in that** it is adapted, making use of RFID sensors and transducers and/or GPS receivers and/or accelerometers, to identify in real time, from time to time or continuously, the location of each operator and whether he is standing still or moving, with various management objectives.

14. Electronic device according to claim 1,
**characterized in that** it is adapted, making use of the connection to the web, to the common networks and/or to mobile phone networks as connected by the GPRS/UMTS receivers, to be used also as a mobile communication device, in audio/video as well as in written form.

15. Electronic device according to claim 1,
**characterized in that** it is adapted to allow the wired or wireless connection of electronic units and components dedicated to specific functions, such as signal transducers, audio interfaces, webcams, bar code readers, life savers or biometric sensors.
